# EUROPÄISCHE PATENTSCHRIFT

(11) **EP 1 153 227 B1**
(45) Veröffentlichungstag und Bekanntmachung des Hinweises auf die Patenterteilung: **08.08.2007**
(21) Anmeldenummer: 00989792.7
(22) Anmeldetag: 22.11.2000
(51) Int. Cl.: F16F 9/05, B60G 11/27, B60G 7/04

(54) **LUFTFEDERANORDNUNG**
AIR-SPRING ASSEMBLY
DISPOSITIF DE SUSPENSION PNEUMATIQUE

(30) Priorität: 09.12.1999 DE 19959531
(43) Veröffentlichungstag der Anmeldung: 14.11.2001
(73) Patentinhaber: Carl Freudenberg KG, 69465 Weinheim (DE)
(72) Erfinder: NÉMETH, József, H-4400 Nyíregyháza (HU); HARSÁNYI, Zsolt, H-4400 Nyíregyháza (HU); CZIFRA, Zoltán, H-4087 Hajdúdorog (HU); KRISTON, Zoltán, H-4320 Nagykálló (HU)
(74) Vertreter: Ripper, Monika Sigrid
(86) Internationale Anmeldenummer: PCT/DE2000/004130
(87) Internationale Veröffentlichungsnummer: WO 2001/042678

(56) Entgegenhaltungen:
- EP-A- 0 123 171
- EP-A- 0 501 043
- EP-A- 0 645 554
- WO-A-00/70238
- DE-A- 3 345 536
- DE-U- 29 510 199
- FR-A- 2 093 330
- JP-A- 51 132 379
- US-A- 5 470 096

## Beschreibung

Die Erfindung betrifft eine Luftfederanordnung, bestehend aus wenigstens folgenden Bauteilen, nämlich:
- einem Luftfederbalg aus elastomerem Werkstoff, der einen volumenelastischen Luftfederinnenraum einschließt, wobei der Luftfederbalg insbesondere mit einem eingebetteten Festigkeitsträger versehen ist;
- einem Luftfederdeckel, an dem das eine Ende des Luftfederbalges befestigt ist;
- einem Luftfederkolben, umfassend
   - einem Stirnbereich am Kolbenboden, der dem Luftfederdeckel gegenüberliegend angeordnet ist;
   - einen Kolbenrand, der den Stirnbereich außenseitig begrenzt, wobei das andere Ende des Luftfederbalges über den Kolbenrand gestülpt ist und dabei in einen vorzugsweise verdickten Befestigungsbereich übergeht, der mittels eines Anbindungselementes am Luftfederkolben innerhalb dessen Stirnbereiches verklemmend befestigt ist;
   - eine seitliche Abrollfläche, an der der Luftfederbalg unter Bildung einer Rollfalte abrollen kann;
   - und einen Basisbereich;
- sowie aus einem Puffer, der innerhalb des Stirnbereichs des Luftfederkolbens angeordnet ist.

Eine gattungsgemäße Luftfederanordnung, häufig auch kurz Luftfeder genannt, ist beispielsweise in den Druckschriften EP-A-0 943 836, EP-A-0 969 223 und EP-A-0 969 224 beschrieben, und zwar mit folgenden konstruktiven Besonderheiten:
- Das Anbindungselement für den Luftfederbalg am Luftfederkolben besteht aus Metall und ist dabei kappenförmig ausgebildet, beispielsweise in Form einer montierbaren Verschlusskappe.
- Der Puffer, der innerhalb des Stirnbereiches des Luftfederkolbens in dem kappenförmigen Anbindungselement eingebettet ist, sichert die Luftfeder im Falle eines Schadhaftwerdens des Luftfederbalges oder bei längerem Stillstand.

In der WO-A-00/70238 (nachveröffentlicht) wird ein Anbindungskonzept vorgestellt, wonach das Anbindungselement für den Luftfederbalg am Luftfederkolben und der Puffer in Form eines sichernden und puffernden Kombinationssystemes ein einziges Bauteil sind.

Manche Fahrzeughersteller wollen nun mit der Luftfeder die maximale Außenposition des Laufwerkes abgrenzen. Dies führt dazu, dass die Gewichte der Achse, der Reifen und des Bremswerkes die Luftfeder stark belasten. Hinzu kommt, dass Zulieferfirmen im Hintergrund eines zunehmenden Preisdruckes nach kostengünstigeren Möglichkeiten bei gleichzeitig hoher technischer Effizienz suchen müssen.

Ausgehend von der oben genannten Problematik zeichnet sich nun die Luftfederanordnung gemäß Kennzeichen des Patentanspruches 1 dadurch aus, dass
- das Anbindungselement für den Luftfederbalg am Luftfederkolben und der Puffer in Form eines sichernden und puffernden Kombinationssystemes ein einziges am Stirnbereich anliegendes und aus einem elastomeren Werkstoff oder einem Kunststoff bestehendes Bauteil ist, bei dem in Bezug auf den Basisbereich des Luftfederkolbens die Höhe des Kolbenrandes kleiner ist als die Höhe des dem Luftfederinnenraum zugewandten Randes des Befestigungsbereiches des Luftfederbalges.

Zweckmäßige Ausgestaltungen der erfindungsgemäßen Luftfederanordnung sind in den Patentansprüchen 2 bis 5 genannt.

Die Erfindung wird nun anhand von Vergleichs- bzw. Ausführungsbeispielen unter Bezugnahme auf schematische Zeichnungen erläutert. Es zeigen:
- Fig. 1, 2: zwei Vergleichsbeispiele einer Luftfederanordnung gemäß dem Stand der Technik unter Verwendung eines kappenförmigen Anbindungselementes mit eingebettetem Puffer;
- Fig. 3, 4: zwei Ausführungsbeispiele der erfindungsgemäßen Luftfederanordnung unter Verwendung des neuen Kombinationssystemes,

In Verbindung mit diesen Figuren gilt die folgende Bezugsziffernliste.
- 1, 1', 1", 1"': Luftfederanordnung
- 2, 2', 2", 2"': Luftfederbalg aus elastomerem Werkstoff
- 3, 3', 3", 3"': volumenelastischer Luftfederinnenraum
- 4, 4', 4", 4"': Rollfalte
- 5, 5', 5", 5"': Luftfederkolben
- 6, 6', 6", 6"': Stirnbereich des Luftfederkolbens
- 7, 7', 7", 7"": Kolbenrand
- 8, 8', 8", 8"': Befestigungsbereich des Luftfederbalges
- 9, 9': kappenförmiges Anbindungselement aus Metall
- 10,10', 10", 10"': Abrollfläche des Luftfederkolbens
- 11, 11', 11", 11"': Basisbereich des Luftfederkolbens
- 12: Puffer aus Kunststoff
- 12': Puffer aus elastomerem Werkstoff
- 13, 13': sicherndes und pufferndes Kombinationssystem
- 14,14', 14", 14"': Rand des Befestigungsbereiches des Luftfederbalges
- 15: einspringendes Teil des Kombinationssystemes
- 16,16': trichterförmige Vertiefung
- 17: Innengehäuse des Kombinationssystemes
- 18: Schraubensystem

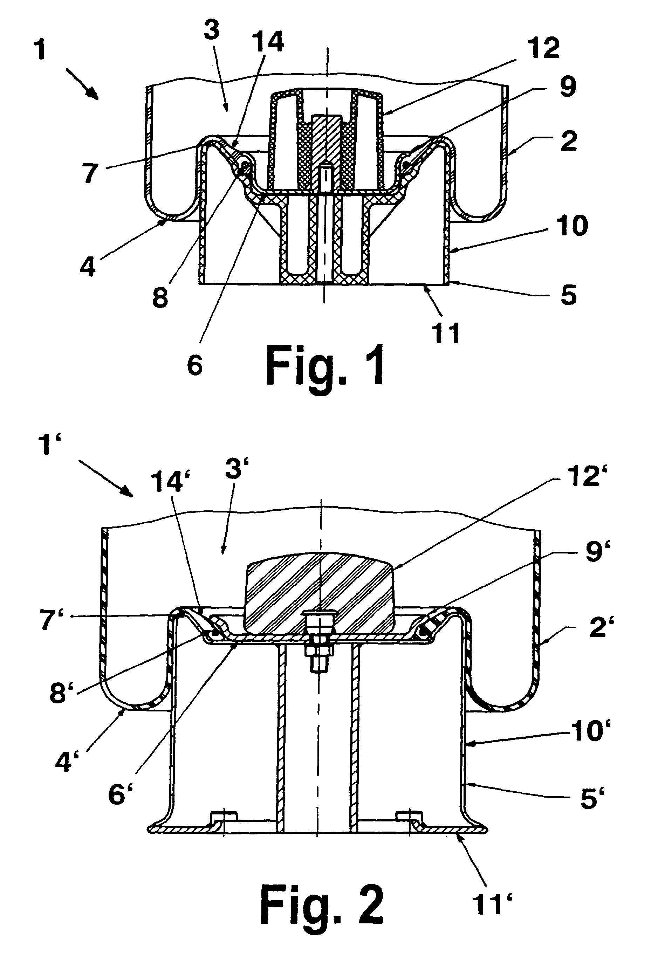

Fig. 1 zeigt eine Luftfederanordnung **1**, bestehend aus wenigstens folgenden Bauteilen:
- einem Luftfederbalg **2** aus elastomerem Werkstoff, der einen volumenelastischen Luftfederinnenraum **3** einschließt, wobei der Luftfederbalg mit einem eingebetteten Festigkeitsträger versehen ist;
- einem Luftfederdeckel, an dem das eine Ende des Luftfederbalges befestigt ist, beispielsweise mittels eines Klemmringes oder Flanschsystemes ;
- einem Luftfederkolben **5,** umfassend
   - einen Stirnbereich **6** am Kolbenboden, der dem Luftfederdeckel gegenüberliegend angeordnet ist;
   - einen Kolbenrand **7,** der den Stirnbereich außenseitig begrenzt, wobei das andere Ende des Luftfederbalges über den Kolbenrand gestülpt ist und dabei in einen verdickten Befestigungsbereich **8** übergeht, der mittels eines Anbindungselementes **9** am Luftfederkolben innerhalb dessen Stirnbereichs verklemmend befestigt ist;
   - eine seitliche Abrollfläche **10,** an der der Luftfederbalg unter Bildung einer Rollfalte 4 abrollen kann;
   - und einen Basisbereich **11,** der wiederum mittels eines zusätzlichen Bauteiles mit dem Laufwerk in Verbindung steht (DE-A-100 30 679);
- sowie aus einem Puffer **12**, der innerhalb des Stirnbereiches des Luftfederkolbens angeordnet ist.

Dieses bauliche Grundkonzept liegt auch den Luftfederanordnungen **1'**, **1"**, und **1'"** gemäß Fig. 2 bis 4 zugrunde, so dass im Folgenden lediglich auf die Unterschiede näher eingegangen wird.

Nach Fig. 1 besteht das Anbindungselement **9** für den Luftfederbalg **2** am Luftfederkolben **5** aus Metall und ist dabei kappenförmig ausgebildet. Der Puffer **12** aus Kunststoff ist innerhalb des Stirnbereiches **6** in dem kappenförmigen Anbindungselement **9** eingebettet. Innerhalb des verdickten Befestigungsbereiches **8** des Luftfederbalges ist das Anbindungselement anvulkanisiert.

Der dem Luftfederinnenraum **3** zugewandte Rand **14** des Befestigungsbereiches **8** des Luftfederbalges ist tiefer angeordnet als der Kolbenrand **7**.

Fig. 2 zeigt eine Luftfederanordnung **1**', die sich in Bezug auf Fig. 1 im Wesentlichen lediglich dadurch unterscheidet, dass der Puffer **12**', der in dem kappenförmigen Anbindungselement **9'** eingebettet ist, aus einem elastomeren Werkstoff besteht, verbunden mit einer anderen Anbindungskonstruktion am Luftfederkolben **5'**, und zwar unter Verwendung einer montierbaren Verschlusskappe.

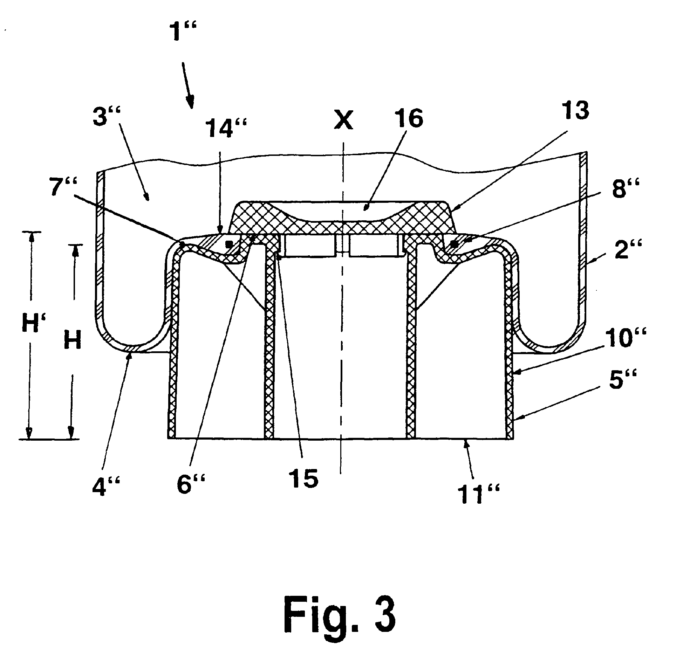

Fig. 3 zeigt nun eine Luftfederanordnung **1**", bei der das Anbindungselement für den Luftfederbalg **2**" am Luftfederkolben **5**" und der Puffer in Form eines sichernden und puffernden Kombinationssystemes **13** ein einziges Bauteil sind.

In Bezug auf den Basisbereich **11"** des Luftfederkolbens **5"** ist hier im Gegensatz zu den Vergleichsbeispielen gemäß Fig. 1 und 2 die Höhe **H** des Kolbenrandes **7"** kleiner als die Höhe **H'** des dem Luftfederinnenraum **3"** zugewandten Randes **14"** des Befestigungsbereiches **8"** des Luftfederbalges **2"**. Nachdem das Kombinationssystem **13** mittels eines einspringenden Teils **15** am Luftfederkolben **5"** befestigt ist, kommt der Rand **14"** des Befestigungsbereiches **8"** in eine zusammengedrückte gespannte Position, die ein besonders wirksames Schließen sichert und zudem Luftdichtigkeit gewährleistet.

Das Kombinationssystem **13** kann anstelle des einspringenden Teiles **15** auch mit einem Drehverschluss am Luftfederkolben **5"** befestigt werden.

Das in Fig. 3 aufgezeigte Konzept des neuen Kombinationssystemes **13** ist dazu geeignet, für eine Luftfederanordnung mit integriertem Schwingungsdämpfer (Stoßdämpfer), der den Luftfederdeckel mit dem Luftfederkolben entlang der Luftfederachse **X** verbindet, verwendet zu werden. Ein derartiger Schwingungsdämpfer ist beispielsweise in der Druckschrift DE-A-198 26 480 beschrieben.

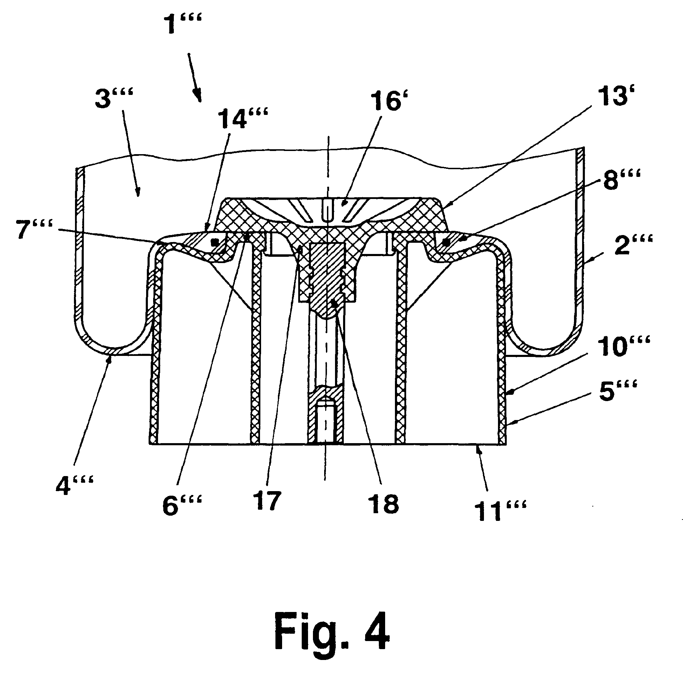

Fig. 4 zeigt eine Luftfederanordnung **1"',** bei der das Kombinationssystem **13'** über ein Innengehäuse **17** mit integriertem Schraubensystem **18** verfügt, das unter Befestigung in den Kernbereich des Luftfederkolbens **5"'** eindringt,

Das Ausführungsbeispiel gemäß Fig. 4 kommt vor allem bei Luftfederanordnungen zum Tragen, die über keinen Schwingungsdämpfer verfügen.

Hinsichtlich des Kombinationssystems **13** und **13'** gemäß Fig. 3 bzw. 4 gelten ferner noch folgende Werkstoff und Konstruktionsparameter:
- Es besteht aus einem elastomerem Werkstoff oder aus Kunststoff mit sichernden und puffernden Eigenschaften zugleich.
- Es weist im Kontaktbereich des Luftfederinnenraumes **3"** bzw. **3"'** eine trichterförmige Vertiefung **16** bzw. **16'** auf, die im Wesentlichen zentrisch um die Luftfederachse **X** verläuft. Mit dieser Maßnahme ist eine Materialeinsparung verbunden, ohne dass das Kombinationssystem **13** bzw. **13'** in seiner Wirkung beeinträchtigt wird.

## Patentansprüche

1. Luftfederanordnung (1, 1', 1", 1 "'), bestehend aus wenigstens folgenden Bauteilen, nämlich
- einem Luftfederbalg (2, 2', 2", 2"') aus elastomerem Werkstoff, der einen volumenelastischen Luftfederinnenraum (3, 3', 3", 3"') einschließt, wobei der Luftfederbalg insbesondere mit einem eingebetteten Festigkeitsträger versehen ist;
- einem Luftfederdeckel, an dem das eine Ende des Luftfederbalges befestigt ist;
- einem Luftfederkolben (5, 5', 5", 5"'), umfassend
• einen Stirnbereich (6, 6', 6", 6"') am Kolbenboden, der dem Luftfederdeckel gegenüberliegend angeordnet ist;
• einen Kolbenrand (7, 7', 7", 7"'), der den Stirnbereich außenseitig begrenzt, wobei das andere Ende des Luftfederbalges über den Kolbenrand gestülpt ist und dabei einen vorzugsweise verdickten Befestigungsbereich (8, 8', 8", 8'") übergeht, der mittels eines Anbindungselementes (9, 9') am Luftfederkolben innerhalb dessen Stirnbereiches verklemmend befestigt ist;
• eine seitliche Abrollfläche (10, 10', 10", 10"'), an der der Luftfederbalg unter Bildung einer Rollfalte (4, 4', 4", 4"') abrollen kann;
• und einen Basisbereich (11, 11', 11 ", 11"');
- sowie aus einem Puffer (12, 12'), der innerhalb des Stirnbereiches des Luftfederkolbens angeordnet ist;
**dadurch gekennzeichnet, dass**
- das Anbindungselement (9, 9') für den Luftfederbalg am Luftfederkolben und der Puffer (12, 12') in Form eines sichernden und puffernden Kombinationssystemes (13, 13') ein einziges am Stirnbereich (6, 6', 6", 6"') anliegendes und aus einem elastomerem Werkstoff oder einem Kunststoff bestehendes Bauteil ist, bei dem in Bezug auf den Basis - bereich (11 ", 11 "') des Luftfederkolbens (5", 5"') die Höhe (H) des Kolbenrandes (7", 7"') kleiner ist als die Höhe (H') des dem Luftfederinnenraum (3", 3"') zugewandten Randes (14", 14"') des Befestigungsbereiches (8", 8"') des Luftfederbalges (2", 2"').

2. Luftfederanordnung nach Anspruch 1, **dadurch gekennzeichnet, dass** das Kombinationssystem (13) mittels eines einspringenden Teiles (15) am Luftfederkolben (5"') befestigt ist.

3. Luftfederanordnung nach Anspruch 1, **dadurch gekennzeichnet, dass** das Kombinationssystem (13) mittels eines Drehverschlusses am Luftfederkolben (5") befestigt ist.

4. Luftfederanordnung nach Anspruch 1, **dadurch gekennzeichnet, dass** das Kombinationssystem (13') über ein Innengehäuse (17) mit integriertem Schraubensystem (18) verfügt, das unter Befestigung in den Kernbereich des Luftfederkolbens (5"') eindringt.

5. Luftfederanordnung nach einem der Ansprüche 1 bis 4, **dadurch gekennzeichnet, dass** das Kombinationssystem (13, 13') im Kontaktbereich des Luftfederinnenraumes (3", 3"') eine trichterförmige Vertiefung (16, 16') aufweist, die im Wesentlichen zentrisch um die Luftfederachse (X) verläuft.

## Claims

1. Air spring arrangement (1, 1', 1", 1"') composed of at least the following components:
- an air spring bellows (2, 2', 2" , 2"') which is made from elastomeric material and encloses an air spring interior space (3, 3', 3", 3"') which is elastic in terms of volume, with the air spring bellows being provided in particular with an embedded strength member;
- an air spring cover to which the one end of the air spring bellows is fastened;
- an air spring piston (5, 5', 5", 5"') comprising:
• a face region (6, 6', 6", 6"') on the piston head, which face region (6, 6', 6", 6"') is arranged facing the air spring cover;
• a piston edge (7, 7', 7", 7"') which delimits the face region at the outside, wherein the other end of the air spring bellows is turned over the piston edge and merges here into a preferably thickened fastening region (8, 8', 8", 8"') which is fastened in a clamped fashion to the air spring piston, within the face region of the latter, by means of a connecting element (9, 9') ;
• a lateral rolling surface (10, 10', 10", 10"') on which the air spring bellows can roll whilst forming a roll fold (4, 4', 4'', 4''');
• and a base region (11, 11', 11", 11"');
- and a buffer (12, 12') which is arranged within the face region of the air spring piston;
**characterized in that**
- the connecting element (9, 9') for the air spring bellows on the air spring piston and the buffer (12, 12') are a single component, in the form of a securing and buffering combination system (13, 13'), which bears against the face region (6, 6', 6", 6"') and is composed of an elastomeric material or a plastic and in which, in relation to the base region (11", 11"') of the air spring piston (5", 5"'), the height (H) of the piston edge (7", 7"') is less than the height (H') of that edge (14", 14"') of the fastening region (8", 8"') of the air spring bellows (2", 2"') which faces towards the air spring interior space (3", 3"').

2. Air spring arrangement according to Claim 1, **characterized in that** the combination system (13) is fastened by means of a snap-in part (15) to the air spring piston (5"').

3. Air spring arrangement according to Claim 1, **characterized in that** the combination system (13) is fastened by means of a turn-lock fastener to the air spring piston (5").

4. Air spring arrangement according to Claim 1, **characterized in that** the combination system (13') has an inner housing (17) with an integrated screw system (18) which, whilst providing fastening, extends into the core region of the air spring piston (5"').

5. Air spring arrangement according to one of Claims 1 to 4, **characterized in that** the combination system (13, 13') has, in the contact region of the air spring interior space (3", 3"'), a funnel- shaped depression (16, 16') which runs substantially centrally around the air spring axis (X).

## Revendications

1. Dispositif de suspension pneumatique (1, 1', 1", 1"') constitué au moins des composants suivants, à savoir
- un soufflet (2, 2', 2" , 2"') de suspension pneumatique en matériau élastomère qui enferme une chambre intérieure (3, 3*'*, 3", 3"') de suspension pneumatique, le soufflet de suspension pneumatique étant notamment pourvu d'un support de résistance incorporé ;
- un couvercle de suspension pneumatique, auquel est fixée l'une des extrémités du soufflet de suspension pneumatique ;
- un piston (5, 5', 5", 5"') de suspension pneumatique, comprenant
- une région frontale (6, 6' , 6", 6"') sur le fond du piston, qui est disposée en vis-à-vis du couvercle de suspension pneumatique ;
- un bord de piston (7, 7', 7", 7"') qui délimite la région frontale sur le côté extérieur, l'autre extrémité du soufflet de suspension pneumatique étant retroussée sur le bord du piston et se raccordant alors à une région de fixation (8, 8', 8", 8"') de préférence épaissie qui, au moyen d'un élément d'attache (9, 9'), est fixée avec serrage sur le piston de suspension pneumatique à l'intérieur de la région frontale de ce dernier ;
- une surface de déroulement latérale (10, 10', 10", 10"') sur laquelle le soufflet de suspension pneumatique peut se dérouler en formant un pli de déroulement (4, 4', 4", 4"') ;
- et une région de base (11, 11', 11", 11"') ;
- et un tampon (12, 12') qui est disposé à l'intérieur de la région frontale du piston de suspension pneumatique ;
**caractérisé en ce que**
- l'élément d'attache (9, 9') du soufflet de suspension pneumatique sur le piston de suspension pneumatique et le tampon (12, 12'), sous la forme d'un système combiné (13, 13') d'assujettissement et de tampon, consistent en un unique composant appliqué contre la région frontale (6, 6', 6", 6´´´) et réalisé en matériau élastomère ou en matière plastique, avec lequel, relativement à la région de base (11" , 11"') du piston (5", 5"') de suspension pneumatique, la hauteur (H) du bord de piston (7", 7"') est inférieure à la hauteur (H') du bord (14", 14"') de la région de fixation (8", 8"') du soufflet (2", 2"') de suspension pneumatique qui est tourné vers la chambre intérieure (3", 3"') de suspension pneumatique.

2. Dispositif de suspension pneumatique selon la revendication 1, **caractérisé en ce que** le système combiné (13) est fixé sur le piston (5"') de suspension pneumatique au moyen d'une partie rentrante (15).

3. Dispositif de suspension pneumatique selon la revendication 1, **caractérisé en ce que** le système combiné (13) est fixé sur le piston (5") de suspension pneumatique au moyen d'une fermeture rotative.

4. Dispositif de suspension pneumatique selon la revendication 1, **caractérisé en ce que** le système combiné (13') dispose d'un boîtier intérieur (17) doté d'un système de vissage intégré (18) qui pénètre avec fixation dans la région centrale du piston (5"') de suspension pneumatique.

5. Dispositif de suspension pneumatique selon l'une quelconque des revendications 1 à 4, **caractérisé en ce que** le système combiné (13, 13') présente, dans la région de contact de la chambre intérieure (3", 3"') de suspension pneumatique, un renfoncement en entonnoir (16, 16') qui s'étend de manière essentiellement centrée autour de l'axe (X) de la suspension pneumatique.
